# EUROPEAN PATENT SPECIFICATION

(11) **EP 1 121 744 B1**
(45) Date of publication and mention of the grant of the patent: **17.01.2007**
(21) Application number: 00951854.9
(22) Date of filing: 27.07.2000
(51) Int. Cl.: H02K 5/136

(54) **ANTI-DEFLAGRATING OPERATING ACTUATOR**
EXPLOSIONSGESICHERTE BETÄTIGUNGSEINRICHTUNG
ACTIONNEUR A FONCTIONNEMENT ANTIDEFLAGRANT

(30) Priority: 19.08.1999 IT TO990719
(43) Date of publication of application: 08.08.2001
(73) Proprietor: Edelweiss Actuators S.r.l., 24050 Zanica, BG (IT)
(72) Inventor: DE MARTINO, Bernardino, I-24068 Seriate (IT)
(74) Representative: Garavelli, Paolo
(86) International application number: PCT/IT2000/000318
(87) International publication number: WO 2001/015303

(56) References cited:
- EP-A- 0 847 807
- FR-A- 2 538 630
- GB-A- 2 230 392
- GB-A- 2 251 790
- GB-A- 2 303 972
- US-A- 3 325 659

## Description

The present invention refers to an actuator adapted to operate in environments with explosive atmosphere that is present in such an amount as to require special precautions when using electric, pneumatic or mechanical apparata.

An actuator in an environment with explosion risks must be able to withstand, according to the degree of risk associated with the type of atmosphere in which the actuator itself operates, the explosion force that is characteristic for any given gas or mixture.

According to the known prior art, there are several deflagration-protecting procedures for an actuator, each one of which being aimed to insulate the components that are prone to explode. In the specific case to which the present invention refers, the protection from deflagration is guaranteed by encapsulating the critical actuator parts into a suitable vessel equipped with outlets both for the connection of mechanical parts transmitting the mechanical power and for the electric supply and control connections.

Other prior art actuators are disclosed in US-A-3325659, which discloses an explosion proof hand held instrument according to the preamble of Claim 1 and GB-A-2303972, which discloses a surface cooled electric motor; other prior art devices are known from EP-A-0847807 and FR-A-2538630.

The geometric shape of the vessel, the volume ratio occupied by the components with respect to the internal volume of the housing containing them and the degree of uniformity of the free volume, are some of the design variables whose optimisation affects both the static response and the dynamic response of the actuator to an explosion. With respect to a possible detonation phenomenon, it is good practice to keep the free volume uniform inside the vessel, thereby avoiding the occurrence of precompression phenomena with following detonation. In the majority of times, a device results that is scarcely appreciated due to excessive overall dimensions with problems in placing it above all where the available space is reduced.

Object of the present invention is solving the above prior-art problems by providing an anti-deflagrating operating actuator, adapted to operate in an enviroment that is classified - according to the standards currently in force - as having the maximum explosion risk, such actuator providing the following features:
- both the components subjected to electric voltage, and the gear reducer, and the motion transmitting mechanism and/or the mechanism transforming the motion from rotary to linear one - in case of an actuator whose output motion is of the linear type - are integrally protected against deflagration;
- the external housing optimally coats the apparata contained therein, reproducing the outline of the contained parts, guaranteeing final reduced volume and weight, and keeping the free volume thereinto uniform, guaranteeing a reduced or even absent detonating effect;
- the outlets connecting the mechanical parts transmitting the mechanical power are ergonomically placed, guaranteeing an easy actuator installation next to walls;
- the outlets conecting electric supply and control connections are placed in such a way as not to interfere with the wiring resistance, thereby avoiding its kinking and the following stretching thereof;
- in case of an angular-operating actuator, the motion transmission is direct, and is obtained through an intermediate connection shaft from the reducer shaft contained into the housing, to the user placed outside.

The above and other objects and advantages of the invention, as will appear from the following description, are obtained by an actuator as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a schematic side view of an anti-deflagrating operating actuator of the angularly operating type; and
- Figure 2 is a schematic side view of an anti-deflagrating operating actuator of the linearly operating type.

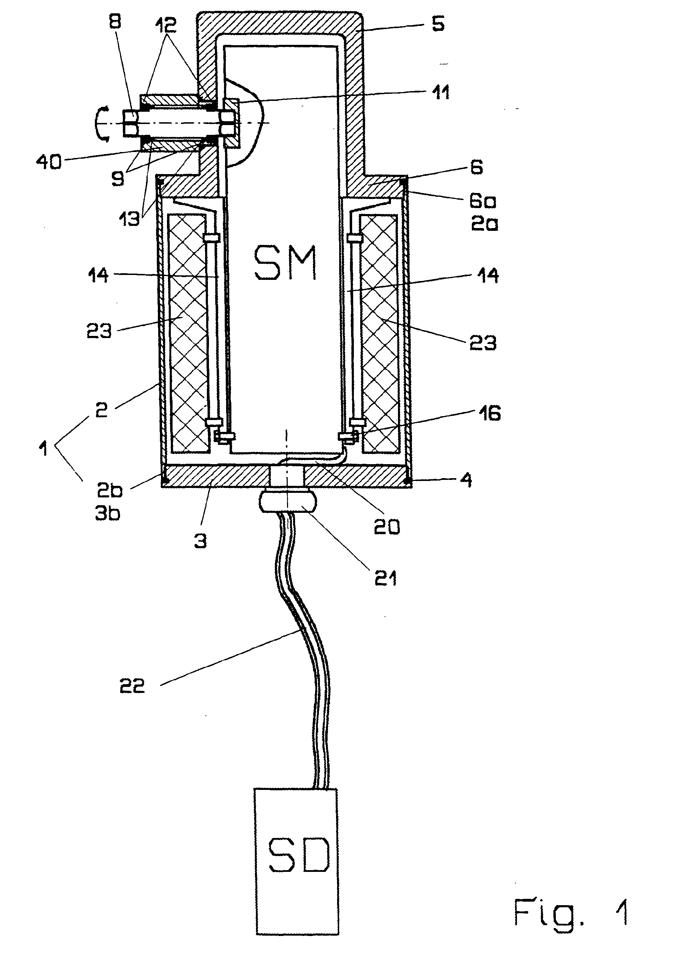

The angularly operating actuator of Fig. 1 is substantially composed of an half-shell 1 whose cylindrical mantle 2, that is smooth and free from interruptions, is equipped at both ends thereof with an internal threading section 2a and 2b with an adequate length.

The opposite end of the cylindrical mantle 2 is closed through a plug 3 with a suitable thickness (s3) that is able to withstand, without distortions, the deflagration-induced force or anyway the design pressure to which the actuator is subjected; an hole or the holes that are necessary for the outside connection of the electric wiring 20, or the related connection, is/are possibly obtained on such plug 3. Next to the threaded coupling, a sealing ring 4 is placed. In a further embodiment of the actuator, the cylindrical mantle 2 is integral with the plug 3. In both cases, they are made of an aluminium alloy melt for shell casts.

An upper half-shell 5, made of an aluminium alloy melt for shell casts, is coupled with the half-shell 1 through a threaded flange 6, having an external threading 6a. This flange 6 operates as a support for the servomotor SM body.

The upper half-shell 5 is equipped with a threaded through-hole that is made of a plane section of the side surface and is coupled with a very thick cylindrical sleeve 40 through the threaded end. Next to the threaded coupling, a sealing ring is placed.

This sleeve 40 is connected to a pin 8 made of stainless steel, such pin 8 transmitting the twisting torque, through the rolling bearings 9 arranged at the two ends of sleeve 40; these bearings 9 are placed with suitable coupling tolerances and are secured through resilient rings 12. The bearings 9, in addition to ensuring the axial centering of the stainless steel pin 8, are able to withstand the possible loads to which such pin 8 is subjected. At least two rings 13, inserted onto the pin 8, are sandwiched between pin 8 and sleeve 40.

The pin 8 is the outlet axis, being equipped with a seat shaped as a prism, and is adapted to transfer the twisting torque by means of the prism-shaped seat 11, integral to the servomotor SM, and perfectly matching the above-described prism-shaped groove.

The servomotor SM is projectingly secured to the threaded flange 6, this latter one being equipped with a suitable groove for sliding the servomotor body when assembling, by aligning its own outlet axis with the transmission axis through threaded fixings; two further brackets 14, integral with the flange 6, allow stiffening the coupling between servomotor SM and housing, through suitable holes obtained at the end of each bracket 14 to secure the threaded pins 16 that are integral with the servomotor.

The fact of having made the servomotor SM integral with the flange 6 allows facilitating the assembling operation with the above-described half-shell 1. In fact, once having assembled the servomotor SM to the respective flange 6, both half-shell 1 and plug 3 are screwed; and after that, as last operation, the electric connection cable is secured through the cable-pressing device 21, this latter one being equipped with a suitable anti-deflagrating operating securing ring nut. The electric cable section 22 that connects the actuator at least till the first shunting box SD is contained into a suitable metallic tear-preventing sheath coated with PVC and with a mechanical seal.

The housing coats the servomotor placed inside it by employing a thickness increase next to the brackets 14 or by adding a volume of suitably dense material 23 where the housing volume that has remained free, particularly in the half-shell 1, is non-uniform with respect to the remaining volume, above the threshold over which uncontrolled detonation phenomena can occur. It is clear that by adding the volume of material 23, it is possible to monitor the detonation by optimising the dynamic actuator response to deflagrations.

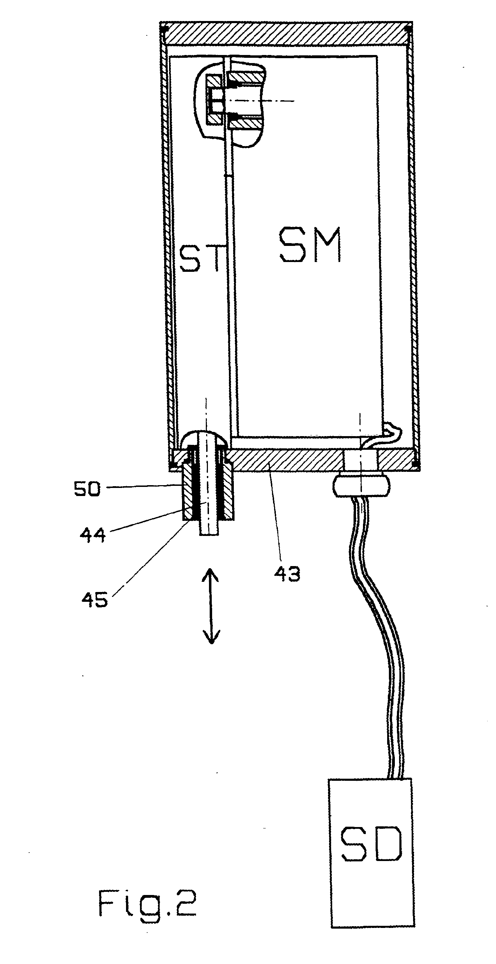

The linearly operating actuator of Fig. 2 is equipped with a box ST transforming the motion from rotary to linear one. This box ST is contained within the housing of the above-described type, being integral with the servomotor SM body.

A very thick cylindrical sleeve 50 is coupled with the flange 43 through the threaded end. This sleeve 50 is connected to a pin 44 made of stainless steel, equipped with a linear translation motion and going out of the motion-transforming box ST through the sliding bearings 45 arranged along the sleeve 50.

Both the final volume and the final weight of the angularly and linearly operating actuators are optimised; the outlets for connecting mechanical parts that transmit the mechanical power are placed in ergonomic positions, guaranteeing an easy actuator installation next to the walls; the outlets for connecting the electric supply and control connections are placed in order not to impair the wiring efficiency, avoiding the kinking and following stretching thereof; in case of the angularly operating actuator, the angular motion transmission is direct, being obtained through an intermediate connection shaft from the reducer shaft, contained inside the housing, to an external user.

A simplified actuator is thereby obtained as regards the number of transmission components, having done without the use of intermediate linear motion transmissions such as the rack, this latter one being widely used in the prior art.

A further novelty obtained by the actuator of the present invention is that the two threaded couplings 2a-6a and 2b-3b between cylindrical mantle 2 and, respectively, flange 6 and circular plug 3, are realised through a left-handed threading SN and a right-handed threading DS, respectively. With such arrangement, it is possible to assemble the two half-shells 1 and 5 by simply rotating the cylindrical mantle 2 with respect to the plug 3 and the flange 6 with the advantage of removing the risk of kinking and stretching the electric wiring. In such a way, the assembly can strictly comply with a simplified procedure divided into several mechanical and automatic steps, having done without the subjective handling intervention with unidirectional threaded elements.

An assembly of this type is available to be used in line with simple rotation steps of the cylindrical trunk and the only translation of the two plugs.

In a further variation of the invention, the brackets 14 that slide and supprt the motor are integrally obtained with the flange 6 through melting in an aluminium alloy shell for casts.

## Claims

1. Anti-deflagrating operating actuator, adapted to operate in an environment with explosion risks, wherein both components that are subjected to electric voltage, and a gear reducer, and a motion transmission mechanism and/or a mechanism transforming rotary motion into linear motion, are integrally protected against deflagration, **characterised in that** a free volume inside the protection housing is kept uniform, the housing volume remained free is made uniform by increasing a thickness next to brackets (14) supporting a servomotor (SM), said brackets (14) being integrally obtained with a flange (6) through melting in an aluminium alloy shell for casts.

2. Anti-deflagrating operating actuator according to Claim 1, **characterised in that** the housing volume remained free is made uniform by filling the housing volume with adequately dense material.

3. Anti-deflagrating operating actuator according to Claim 1, **characterised in that** an external protection housing optimally coats apparata contained into the actuator, perfectly reproducing an outline of all parts contained into the actuator.

4. Anti-deflagrating operating actuator according to Claim 1, **characterised in that** outlets for connecting mechanical parts that transmit mechanical power are placed in ergonomic positions with reduced encumbrance.

5. Anti-deflagrating operating actuator according to Claim 1, **characterised in that** outlets for connecting electric supply and control connections are placed in order not to impair wiring resistance, avoiding to kink and consequently to stretch the wiring.

6. Anti-deflagrating operating actuator according to Claim 1, **characterised in that** an angular motion transmission is direct.

7. Anti-deflagrating operating actuator according to Claim 1, **characterised in that** an electric connection cable is secured to the housing through a cable-pressing device (21) equipped with a suitable securing and anti-deflagrating operating ring nut.

8. Anti-deflagrating operating actuator according to Claim 7, **characterised in that** a section of the electric cable that connects the actuator at least up to a first shunting box is contained in a suitable metallic tear-preventing sheath, reinforced with PCT and with a mechanical seal.

## Patentansprüche

1. Aktuator in Explosionsgeschützter Ausführung, der für den Betrieb in Umgebungen mit Explosionsgefahr geeignet ist, in dem sowohl die Bestandteile, die unter Stromspannung stehen als auch ein Zahnradgetriebe sowie ein Mechanismus für die Übertragung der Bewegung und/oder ein Mechanismus für die Umsetzung von einer Umdrehungsbewegung in eine lineare Bewegung vollständig gegen Explosion geschützt sind; der Aktuator ist **dadurch gekennzeichnet, dass** das freie Volumen in der Schutzumhüllung gleichförmig gehalten wird, das frei gebliebene Volumen wird durch eine Erhöhung der Dicke bei den Haltebügeln (14) eines Servomotors (SM) gleichförmig gemacht; diese Bügel (14) werden vollständig mit einem Flansch (6) durch Aluminiumkokillenguss erhalten.

2. Aktuator in Explosionsgeschützter Ausführung gemäß Patentanspruch 1, der **dadurch gekennzeichnet ist, dass** das frei gebliebene Volumen der Umhüllung gleichförmig gemacht wird, indem das Volumen der Umhüllung mit angemessen dichtem Material gefüllt wird.

3. Aktuator in Explosionsgeschützter Ausführung gemäß Patentanspruch 1, der **dadurch gekennzeichnet ist, dass** eine externe Schutzumhüllung optimal die Instrumente verkleidet, die sich im Aktuator befinden und perfekt die Form aller im Aktuator enthaltenen Teile reproduziert.

4. Aktuator in Explosionsgeschützter Ausführung gemäß Patentanspruch 1, der **dadurch gekennzeichnet ist, dass** die Ausgänge für die Verbindung der mechanischen Teile für die Übertragung der mechanischen Leistung in ergonomischen Positionen mit reduziertem Platzaufwand untergebracht sind.

5. Aktuator in Explosionsgeschützter Ausführung gemäß Patentanspruch 1, der **dadurch gekennzeichnet ist, dass** die Ausgänge für die Verbindung der Stromversorgungs- und Steuerungsanschlüsse so angebracht sind, dass sie nicht den Widerstand der Verkabelung beeinträchtigen, so dass Verwicklungen und darauf folgende Dehnungen der Verkabelung vermieden werden.

6. Aktuator in Explosionsgeschützter Ausführung gemäß Patentanspruch 1, der **dadurch gekennzeichnet ist, dass** die Übertragung der Winkelbewegung direkt ist.

7. Aktuator in Explosionsgeschützter Ausführung gemäß Patentanspruch 1, der **dadurch gekennzeichnet ist, dass** ein elektrisches Verbindungskabel mit einer Kabelverschraubung (21) an der Umhüllung befestigt wird, die mit einer entsprechenden Nutmutter in Explosionsgeschützter Ausführung ausgestattet ist.

8. Aktuator in Explosionsgeschützter Ausführung gemäß Patentanspruch 7, der **dadurch gekennzeichnet ist, dass** ein Abschnitt des Stromkabels, das den Aktuator mindestens mit der ersten Dose verbindet, in einer entsprechenden verstärkten Metallhülle aus PVC, die risssicher und mechanisch dicht ist, enthalten ist.

## Revendications

1. Activateur en exécution antidéflagrante, capable de fonctionner dans des milieux à risque d'explosion, où les composants soumis à la tension électrique, le réducteur à engrenages, le mécanisme de transmission du mouvement et/ou le mécanisme de transformation du mouvement de rotatoire à linéaire, sont intégralement protégés contre la déflagration, **caractérisé en ce que** le volume libre à l'intérieur du carter de protection est maintenu uniforme, le volume du carter resté libre étant rendu uniforme à travers l'augmentation de l'épaisseur en correspondance de brides (14) de soutien d'un servomoteur (SM), lesdites brides (14) étant obtenues intégralement avec une bride (6) avec le moulage en coquille d'une fusion d'un alliage d'aluminium pour moulages.

2. Activateur en exécution antidéflagrante selon la Revendication 1, **caractérisé en ce que** le volume du carter resté libre est rendu uniforme en remplissant le volume du carter de matériau suffisamment dense.

3. Activateur en exécution antidéflagrante selon la Revendication 1, **caractérisé en ce que** un carter de protection extérieur couvre en mode optimal les composants dans l'activateur en reproduisant parfaitement la forme de tous les composants contenus dans l'activateur.

4. Activateur en exécution antidéflagrante selon la Revendication 1, **caractérisé en ce que** les sorties pour le raccordement des pièces mécaniques de transmission de la puissance mécanique sont placées en positions ergonomiques et avec un encombrement réduit.

5. Activateur en exécution antidéflagrante selon la Revendication 1, **caractérisé en ce que** les sorties pour le branchement des connexions d'alimentation électrique et de contrôle sont placées de manière à ne pas compromettre la résistance du câblage, en évitant d'entortiller et d'étirer le câble.

6. Activateur en exécution antidéflagrante selon la Revendication 1, **caractérisé en ce que** la transmission du mouvement angulaire est directe.

7. Activateur en exécution antidéflagrante selon la Revendication 1, **caractérisé en ce qu'**un câble de branchement électrique est fixé au carter au moyen d'un presse-câble (21) muni d'un écrou de fixation et en exécution antidéflagrante.

8. Activateur en exécution antidéflagrante selon la Revendication 7, **caractérisé en ce que** une portion du câble électrique reliant l'activateur jusqu'au moins le premier boîtier de dérivation est contenu dans une gaine métallique renforcée avec PVC, anti-déchirure et à tenue mécanique.
